# EUROPEAN PATENT APPLICATION

(11) **EP 3 132 690 A1**
(43) Date of publication of application: **22.02.2017**
(21) Application number: 15780604.3
(22) Date of filing: 14.04.2015
(51) Int. Cl.: A23L 17/00, A23L 27/10, A23L 27/23, A23B 4/044

(54) **DRIED FISH EXTRACT HAVING EXCELLENT FLAVOR, AND METHOD FOR MANUFACTURING SAME**

(30) Priority: 16.04.2014 JP 2014084468
(71) Applicant: Takasago International Corporation, Tokyo 144-8721 (JP)
(72) Inventor: WASHIZU Yukio, Hiratsuka-shi Kanagawa 254-0073 (JP); EMOTO Eiji, Hiratsuka-shi Kanagawa 254-0073 (JP); HIRAMOTO Tadahiro, Hiratsuka-shi Kanagawa 254-0073 (JP)
(74) Representative: Zimmermann & Partner Patentanwälte mbB
(86) International application number: PCT/JP2015/061476
(87) International publication number: WO 2015/159884

(57) **Abstract**

The present invention provides a dried-fishes extract having excellent flavor, and a method for manufacturing the same. Specifically, the present invention provides a dried-fishes extract comprising at least 3.5 ppm of 4-methylveratrole.

## Description

### Technical Field

The present invention relates to a dried-fishes extract having an excellent flavor and a method for producing the dried-fishes extract.

### Background Art

Dried fishes represented by dried bonito (KATSUOBUSHI) have been used as ingredients for seasoning, together with salt, sugar, soy sauce, soybean paste, and the like, and are food ingredients very popular in the Japanese lifestyle. Among the dried fishes, especially, dried bonito has been used very often with edible kelp (Kombu) in the form of a soup stock, which is an extract used for the purposes of the umami taste and the like. Dried bonito includes unmolded dried bonito (ARABUSHI) and molded dried bonito (KAREBUSHI). Most dried-bonito extracts on the market are produced by using ARABUSHI, which is an unmolded ingredient, as an ingredient, because of limitations of the price. ARABUSHI extracts are characterized by the strong smoky odor. The smoky odor is a part of the characteristics of the flavor of dried fishes; however, the ARABUSHI extracts do not have the luxury, well-balanced, and mellow flavor, which KAREBUSHI has.

On the other hand, KAREBUSHI is produced by repeating a fermentation and drying step, in which ARABUSHI is molded, then fermented at a temperature of 25 to 30°C and a humidity of 80 to 85% for 2 weeks, and further dried in the sun for one day, about two to seven times. KAREBUSHI, which requires a lot of time and labor, is considered to be a very luxury product. KAREBUSHI is highly valued in the form of a luxury extract, because it has a flavor which is more luxury, balanced better, and mellower than that of ARABUSHI. KAREBUSHI extracts are highly valued, but are said to have low potencies considering the price. Hence, KAREBUSHI extracts do not become popular among ordinary household consumers or the like, but KAREBUSHI extracts are used in only limited places such as high-class Japanese-style restaurants.

As described above, KAREBUSHI, which requires the molding step, is highly valued from the viewpoint of the flavor. However, KAREBUSHI is much more expensive, is not higher in potency, and requires much more time and labor than ARABUSHI, and hence the amount of KAREBUSHI produced is limited. Accordingly, KAREBUSHI has not been used so much by ordinary household consumers yet.

Known dried fishes and methods for producing the dried fishes are as follows. Japanese Patent Application Publication No. Hei 3-236762 describes a method for producing a dried fishes flavor, in which a molding treatment is performed on a ground ARABUSHI powder; followed by extraction with carbon dioxide. Japanese Patent Application Publication No. 2011-33414 describes a method for identifying dried bonito molded twice or more on the basis of the concentration of veratrole contained in the dried bonito. Japanese Patent Application Publication No. Hei 11-196813 describes a seasoning liquid comprising a dried fish, a peptide, and a protease. Japanese Patent Application Publication No. 2006-094756 recites that an enzymatic degradation-type seasoning having an improved taste with no bitterness is obtained in a high extraction yield, and describes an enzymatic degradation-type seasoning obtained by degrading an aqueous dispersion of an ingredient containing meat or meat-derived animal proteins with an enzyme obtained from Pycnoporus coccineus at a pH of 2.0 to 6.0 and at a temperature of 30 to 70°C to prepare an extract. Japanese Patent Application Publication No. Sho 60-98960 describes a method for processing a hot-water extraction liquid of a red-fleshed fish, in which the hot-water extraction liquid of the red-fleshed fish is treated with a proteolytic enzyme, electrodialyzed using an ion exchange membrane, and then concentrated by evaporation under reduced pressure. Japanese Patent Application Publication No. Sho 60-164454 describes a method for producing a dried-fishes seasoning, in which the sodium 5'-inosinate content is adjusted to 0.7% by weight or higher by adding sodium 5'-inosinate or concentrating a dried-fishes extract, and the pH is adjusted to 4.5 to 6.3 with lactic acid. Japanese Patent Application Publication No. 2011-36206 describes a method for producing KOJI (a Japanese fermentation starter) using a bonito extract as a culture material and a KOJI mold of the genus Aspergillus as a KOJI mold, and also describes a seasoning to which the produced KOJI is added.

### Summary of Invention

Seasoning liquids and extracts have been invented so far toward good umami taste and flavor. However, under the current situation, it is difficult to obtain an extract in which the flavor intrinsic to KAREBUSHI is reinforced in a balanced manner.

The present invention has been made in view of the above-described problems, and an object of the present invention is to clarify conditions for a dried-fishes extract having an excellent flavor as perceived in KAREBUSHI, and also to provide an extract by a simple method in a short period.

The inventors of the present application have found that the above-described object can be achieved by a dried-fishes extract comprising a predetermined amount of 4-methylveratrole. This finding has led to the completion of the invention of the present application.

Specifically, the present invention provides a dried-fishes extract comprising 4.0 ppm or more of 4-methylveratrole. The present invention also provides a method for producing the above-described dried-fishes extract, comprising the steps of: fermenting a suspension of a dried fishes by adding a mold; and performing an enzymatic treatment on the suspension.

The present invention makes it possible to obtain a dried-fishes extract having an excellent flavor.

### Description of Embodiments

The present invention provides a dried-fishes extract comprising 3.5 ppm or more of 4-methylveratrole. The amount of 4-methylveratrole in the dried-fishes extract of the present invention is preferably 3.5 ppm or more and 100.0 ppm or less, more preferably 4.0 ppm or more and 80.0 ppm or less, and further preferably 4.0 ppm or more and 50.0 ppm or less. For example, the amount of 4-methylveratrole can be 20.0 ppm or more and 80.0 ppm or less, and preferably 30.0 ppm or more and 50.0 ppm or less.

The dried-fishes extract of the present invention preferably further comprises 40 ppm or more of inosinic acid. The amount of inosinic acid in the dried-fishes extract of the present invention is preferably 40 ppm or more and 1,000 ppm or less, more preferably 40 ppm or more and 800 ppm or less, and further preferably 40 ppm or more and 600 ppm or less. For example, the amount of inosinic acid can be 100 ppm or more and 800 ppm or less, and preferably 200 ppm or more and 600 ppm or less.

Preferably, the dried-fishes extract of the present invention comprises 4-methylveratrole and inosinic acid in the above-described amounts with a Brix value being 3.5 to 7.5. Preferably, the dried-fishes extract of the present invention comprises 4-methylveratrole and inosinic acid in the above-described amounts under a condition where the Brix value is 4 to 6.

The Brix value herein refers to a value obtained by subtracting the actually measured value of a solvent having the same concentration as that of the dried-fishes extract from the actually measured value of the dried-fishes extract, or, when the dried-fishes extract contains a salt, a value obtained by subtracting the actually measured value of a solvent which has the same concentration as that of the dried-fishes extract and to which the salt is added at the same concentration as the concentration at which the salt is added to the dried-fishes extract from the actually measured value of the dried-fishes extract. Note that each actually measured value refers to the reading of the measurement display value in measurement using a Brix meter (refractometer). The Brix meter is one of the analytical instruments based on the light refraction phenomenon, and shows the soluble solid content in an aqueous solution as an application of the light refraction phenomenon.

In the present invention, the dried-fishes extract is preferably one or more selected from dried bonito (KATSUOBUSHI), dried frigate mackerel(SODABUSHI), dried mackerel (SABABUSHI), dried sardine (IWASHIBUSHI), dried round herring (URUMEBUSHI), dried scad (MUROBUSHI), dried flying fish (AGOBUSHI), and dried tuna (MAGUROBUSHI). Of the above-described dried fishes, dried bonito, SODABUSHI, SABABUSHI, URUMEBUSHI, MUROBUSHI, and MAGUROBUSHI are preferable, and dried bonito is particularly preferable.

The dried-fishes extract of the present invention may be produced by a method comprising the steps of: fermenting a suspension of a dried fishes by adding a mold, and performing an enzymatic treatment on the suspension. The above-described steps may be conducted in any order.

The above-described fermentation step is preferably conducted by inoculating the mold into a suspension of a dried fishes or an enzymatically treated liquid of the suspension. The temperature and the period for the culture can be determined, as appropriate, by a person skilled in the art, and the culture may be conducted, for example, at a temperature of 20 to 30°C for 3 to 14 days, and preferably 5 to 9 days. The culture can be carried out by a method such as aeration culture with stirring or shaking culture.

The mold used in the above-described fermentation step is not particularly limited, and a person skilled in the art can select, as appropriate, suitable one according to the type of the dried fishes used and the like. It is preferable to use a mold selected from the group of the genus Eurotium and the genus Aspergillus. More preferably, the mold used in the method of the present invention is selected from Eurotium repens, Eurotium herbariorum, Eurotium rubrum, and Aspergillus sydowii. It is possible to use any combination of one or more of the above-described molds, as appropriate.

In the above-described fermentation step, the mold grows in the suspension in 3 to 5 days after the start of the culture, and the smoky odor and the sour taste and odor decrease which are flavor components characteristic of ARABUSHI. Five to nine days after the start of the culture, a high-potency excellent suspension can be obtained which has a KAREBUSHI-like luxury, well-balanced, mellow flavor. The suspension may be used as it is, or a filtrate obtained by filtration may be used.

In the step of performing an enzymatic treatment of the present invention, it is possible to use any enzyme, especially, a hydrolase having an action of deriving a good umami taste and flavor from constituents of the dried fishes. Specifically, the enzymes include nucleases, deaminases, proteases, glutaminases, asparaginases, and the like. Of the above-described enzymes, nucleases, deaminases, and proteases are preferable. The nucleases, deaminases, and proteases used in the present invention are not particularly limited, and it is possible to use any one selected from those derived from various microorganisms such as molds, yeasts, and bacteria, those derived from plants, and those derived from animals.

The nucleases include Nuclease "Amano" (manufactured by Amano Enzyme Inc.), Sumizyme NP (manufactured by Shin-Nihon Chemical Co., Ltd.), and the like. Other nucleases can also be used without any problem. The deaminases include Deamizyme (manufactured by Amano Enzyme Inc.), Sumizyme DEA (manufactured by Shin-Nihon Chemical Co., Ltd.), and the like. Other deaminases can also be used without any problem. The proteases include Protease N, Protease NL, Protease S, Prorazor FG-F, Papain W-40, Umamizyme, Peptidase R, Protease A, Protease P, and Protease M (each of which is from Amano Enzyme Inc.), Neutrase, Protamex, Alcalase, and Flavourzyme (each of which is from Novozymes), Bromelain (which is from Biocon (Japan) Ltd.), Orientase 22BF, Nucleicin, Orientase OP, Bromelain, Orientase 10NL, Orientase 90, Orientase 20A, and Orientase ONS (each of which is from HBI Enzymes Inc.), Denapsin 2P and Denazyme AP (each of which is from Nagase ChemteX Corporation), Sumizyme BR, Sumizyme FL-G, Sumizyme ACP, Sumizyme LP50D, Sumizyme AP, Sumizyme MP, Sumizyme FP, and Sumizyme LP (each of which is from Shin-Nihon Chemical Co., Ltd.), and the like. Other proteases can also be used without any problem. In addition, the enzymatic treatment may be conducted by using two or more enzymes selected from the above-described enzymes. In such a case, the enzymes may be added in any order, and may be added simultaneously or separately.

The pH, the temperature, the period, the amount of the enzyme, and the like for the enzymatic treatment can be set, as appropriate, by a person skilled in the art according to the type and the amount of the dried fish, the type of the enzyme, and the like. For example, when a nuclease is used, the enzymatic treatment can be conducted by employing conditions of a pH of 4 to 7, a temperature of 40 to 70°C, a period of 0.5 to 40 hours, an amount of the enzyme of 0.005% to 1.0% (w/v), and the like. Meanwhile, when a deaminase is used, the enzymatic treatment can be conducted by employing conditions of a pH of 4 to 8, a temperature of 20 to 60°C, a period of 1 to 40 hours, an amount of the enzyme of 0.001% to 1.0% (w/v), and the like. Meanwhile, when a protease is used, the enzymatic treatment can be conducted by employing conditions of a pH of 4 to 8, a temperature of 30 to 60°C, a period of 1 to 40 hours, an amount of the enzyme of 0.001% to 1.0% (w/v), and the like.

After the above-described enzymatic treatment, the enzyme may be inactivated by heating the suspension, if necessary. The heating for this purpose can be conducted preferably at a temperature of 85 to 140°C for 10 to 120 minutes.

After the above-described fermentation and enzymatic treatment are conducted, a salt may further be added to the suspension, if necessary. The concentration of the salt can be determined, as appropriate, considering the balance among necessary flavor components, without any particular limitation. The salt is preferably added to be 0 to 29% (w/w), more preferably 0 to 20% (w/w), and further preferably 0 to 10% (w/w) in a final suspension to which an additional solvent described later is added. The "salt" in the present invention preferably refers to sodium chloride. However, a salt containing components other than sodium chloride can also be used, and refined salt or common salt or unrefined salt containing bittern components can also be preferably used.

After the above-described fermentation with a mold and the enzymatic treatment are performed, water, ethanol, propylene glycol, glycerin, triacetin, or a solvent which is a combination of any ones of them is added to the suspension, if necessary. This makes it possible to further efficiently extract the essence from the dried fishes into the solution. The solvent is preferably a mixture of ethanol and water, and, for example, it is preferable to use 50% (w/w) or higher, 60% (w/w) or higher, 70% (w/w) or higher, 80% (w/w) or higher, or 90% (w/w) or higher ethanol.

In the above-described operation, the concentration of the additional solvents (excluding water) relative to the entirety of the suspension can be determined, as appropriate, considering the balance among necessary flavor components without any particular limitation. From the viewpoint of the flavor, the solvent is added to be preferably 0 to 90% (w/w), and more preferably at 0 to 70% (w/w) in the dried-fishes extract obtained by the extraction.

After the above-described solvent is added, the suspension is placed under an environment where the temperature, the period, the pressure, and the like are adjusted, as appropriate, so that the extraction of the essence can be promoted. Here, the temperature, the period, the pressure, and the like are not particularly limited, and can be determined, as appropriate, by a person skilled in the art. The temperature of the solvent may be preferably 4 to 80°C, and further preferably 30 to 70°C. The period may be preferably 0.5 to 24 hours, and further preferably 1 hour to 5 hours. Regarding the pressure, any of a normal pressure condition, a reduced pressure condition, and a pressurized condition is acceptable. The pressure is preferably a normal pressure condition. After the above-described operation, the solid content is removed by filtration or the like, so that a final dried-fishes extract can be obtained.

The dried-fishes extract may be in a form of a mixture with a suitable diluent or carrier. Examples of the diluent and carrier include solid diluents or carriers such as gum arabic, dextrin, glucose, and sucrose, and liquid diluents or carriers such as water, ethanol, propylene glycol, glycerin, sorbitol, triacetin, and surfactants. The flavor-improving agent of the present invention may be, for example, in a powder form, a granular form, a liquid form, an emulsion form, or other suitable forms. Alternatively, the flavor-improving agent of the present invention may be in a liquid form by being dissolved in, for example, ethanol, propylene glycol, glycerin, sorbitol, triacetin or a mixture of any ones of them. Moreover, the flavor-improving agent of the present invention may be prepared in a powder form by adding a suitable amount of an excipient such as dextrin, as appropriate.

Regarding the amount of the dried-fishes extract added to a food or beverage, the dried-fishes extract of the present invention can be added to a food or beverage, unless the original flavor is impaired. The amount is preferably in a range from 0.01 to 30% (w/w), and further preferably in a range from 0.1 to 10% (w/w) based on the food or beverage.

In addition, the dried-fishes extract of the present invention can be added to any food or beverage. Such foods and beverages include, but are not limited to, soups such as soup stock, Chinese soup, stew, and curry, processed foods using meat, chicken, seafood, or the like as an ingredient, seasonings, Furikake (rice seasonings), instant foods, snack foods, canned foods, dairy products, confectionery products, cold sweets, and the like.

### [Examples]

Hereinafter, the present invention is described more specifically based on Examples; however, the present invention is not limited at all to these Examples.

### [Example 1]

To 31 g of KATSUOBUSHI ARABUSHI SOSAI (dried bonito, unfermented, coarsely crushed) HU-MS (manufactured by Izumi Shokuhin Co., Ltd.), 62 g of water was added, followed by sterilization at 90°C for 20 minutes. After the sterilization, Eurotium repens strain JCM 1580 was inoculated, and cultured for 7 days by shaking culture at 27°C. To the culture liquid of Eurotium repens strain JCM 1580, 0.1 g of Nuclease "Amano" (manufactured by Amano Enzyme Inc.) was added, and the reaction was allowed to proceed with stirring at 50°C for 20 hours. After the reaction, the reaction liquid was heated at 105°C for 30 minutes to perform inactivation. After the inactivation of the enzyme, the reaction liquid was cooled, and 76.4 g of 95% ethanol was added. Extraction was carried out with stirring at 40°C for 2 hours, and then the solid content was removed by filtration. Thus, an extract was obtained.

### [Example 2]

To 31 g of KATSUOBUSHI ARABUSHI SOSAI HU-MS (manufactured by Izumi Shokuhin Co., Ltd.), 62 g of water was added, followed by sterilization at 90°C for 20 minutes. After the sterilization, Aspergillus sydowii strain JCM 22929 was inoculated, and cultured for 7 days by shaking culture at 27°C. To the culture liquid of Aspergillus sydowii strain JCM 22929, 0.1g of Protease A "Amano" G (manufactured by Amano Enzyme Inc.) was added, and the reaction was allowed to proceed with stirring at 50°C for 20 hours. After the reaction, the reaction liquid was heated at 105°C for 30 minutes to perform inactivation. After the inactivation of the enzyme, the reaction liquid was cooled, and 76.4 g of 95% ethanol was added. Extraction was carried out with stirring at 40°C for 2 hours, and then the solid content was removed by filtration. Thus, an extract was obtained.

### [Example 3]

To 31 g of KATSUOBUSHI ARABUSHI SOSAI HU-MS (manufactured by Izumi Shokuhin Co., Ltd.), 62 g of water was added, followed by sterilization at 90°C for 20 minutes. After the sterilization, Eurotium herbariorum strain JCM 10081 was inoculated, and cultured for 7 days by shaking culture at 27°C. To the culture liquid of Eurotium herbariorum strain JCM 10081, 0.1g of Deamizyme (manufactured by Amano Enzyme Inc.) was added, and the reaction was allowed to proceed with stirring at 50°C for 20 hours. After the reaction, the reaction liquid was heated at 105°C for 30 minutes to perform inactivation. After the inactivation of the enzyme, the reaction liquid was cooled, and 76.4 g of 95% ethanol was added. Extraction was carried out with stirring at 40°C for 2 hours, and then the solid content was removed by filtration. Thus, an extract was obtained.

### [Example 4]

To 31 g of KATSUOBUSHI ARABUSHI SOSAI HU-MS (manufactured by Izumi Shokuhin Co., Ltd.), 62 g of water was added, followed by sterilization at 90°C for 20 minutes. After the sterilization, Eurotium repens strain JCM 23060 was inoculated, and cultured for 7 days by shaking culture at 27°C. To the culture liquid of Eurotium repens strain JCM 23060, 0.1 g of Nuclease "Amano" (manufactured by Amano Enzyme Inc.) and 0.1 g of Deamizyme (manufactured by Amano Enzyme Inc.) were added, and the reaction was allowed to proceed with stirring at 50°C for 20 hours. After the reaction, 15 g of refined salt (manufactured by The Salt Industry Center of Japan.) was added to the reaction liquid, and inactivation was carried out under heating at 105°C for 30 minutes. After the inactivation of the enzyme, the reaction liquid was cooled, and 76.4 g of 95% ethanol was added. Extraction was carried out with stirring at 40°C for 2 hours, and then the solid content was removed by filtration. Thus, an extract was obtained.

### [Example 5]

To 31 g of KATSUOBUSHI ARABUSHI SOSAI HU-MS (manufactured by Izumi Shokuhin Co., Ltd.), 62 g of water was added, followed by sterilization at 90°C for 20 minutes. After the sterilization, Eurotium rubrum strain JCM 22920 was inoculated, and cultured for 7 days by shaking culture at 27°C. To the culture liquid of Eurotium rubrum strain JCM 22920, 0.1 g of Nuclease "Amano" (manufactured by Amano Enzyme Inc.) and 0.1 g of Protease A "Amano" G (manufactured by Amano Enzyme Inc.) were added, and the reaction was allowed to proceed with stirring at 50°C for 20 hours. After the reaction, the reaction liquid was heated at 105°C for 30 minutes to perform inactivation. After the inactivation of the enzyme, the reaction liquid was cooled, and 76.4g of 95% ethanol was added. Extraction was carried out with stirring at 40°C for 2 hours, and then the solid content was removed by filtration. Thus, an extract was obtained.

### [Example 6]

To 31 g of KATSUOBUSHI ARABUSHI SOSAI HU-MS (manufactured by Izumi Shokuhin Co., Ltd.), 62 g of water was added, followed by sterilization at 90°C for 20 minutes. After the sterilization, Eurotium herbariorum strain JCM 10081 was inoculated, and cultured for 7 days by shaking culture at 27°C. To the culture liquid of Eurotium herbariorum strain JCM 10081, 0.1 g of Deamizyme (manufactured by Amano Enzyme Inc.) and 0.1 g of Protease A "Amano" G (manufactured by Amano Enzyme Inc.) were added, and the reaction was allowed to proceed with stirring at 50°C for 20 hours. After the reaction, the reaction liquid was heated at 105°C for 30 minutes to perform inactivation. After the inactivation of the enzyme, the reaction liquid was cooled, and 76.4g of 95% ethanol was added. Extraction was carried out with stirring at 40°C for 2 hours, and then the solid content was removed by filtration. Thus, an extract was obtained.

### [Example 7]

To a mixture of 21 g of KATSUOBUSHI ARABUSHI SOSAI HU-MS (manufactured by Izumi Shokuhin Co., Ltd.) and 10 g of a dried-bonito extract B-60 (manufactured by Maruhachi Muramatsu, Inc.), 62 g of water was added, followed by sterilization at 90°C for 20 minutes. After the sterilization, Eurotium repens strain JCM 1580 was inoculated, and cultured for 7 days by shaking culture at 27°C. To the culture liquid of Eurotium repens strain JCM 1580, 0.1 g of Nuclease "Amano" (manufactured by Amano Enzyme Inc.), 0.1 g of Deamizyme (manufactured by Amano Enzyme Inc.), and 0.1 g of Protease A "Amano" G (manufactured by Amano Enzyme Inc.) were added, and the reaction was allowed to proceed with stirring at 50°C for 20 hours. After the reaction, 15 g of refined salt (manufactured by The Salt Industry Center of Japan.) was added to the reaction liquid, and inactivation was carried out under heating at 105°C for 30 minutes. After the inactivation of the enzyme, the reaction liquid was cooled, and 76.4 g of 95% ethanol was added. Extraction was carried out with stirring at 40°C for 2 hours, and then the solid content was removed by filtration. Thus, an extract was obtained.

### [Example 8]

To 31 g of KATSUOBUSHI ARABUSHI SOSAI HU-MS (manufactured by Izumi Shokuhin Co., Ltd.), 62 g of water was added, followed by sterilization at 90°C for 20 minutes. After the sterilization, the mixture was cooled, and 76.4g of 95% ethanol was added. Then, extraction was carried out with stirring at 40°C for 2 hours, and the solid content was removed by filtration. To the resultant extract, 4-methylveratrole and inosinic acid were added to achieve a 4-methylveratrole concentration in the extract of 4.0 ppm and further to achieve an inosinic acid concentration in the extract of 51 ppm. Thus, an extract was obtained.

### [Example 9]

To 31 g of KATSUOBUSHI ARABUSHI SOSAI HU-MS (manufactured by Izumi Shokuhin Co., Ltd.), 62 g of water was added, followed by sterilization at 90°C for 20 minutes. After the sterilization, the mixture was cooled, and 76.4 g of 95% ethanol was added. Extraction was carried out with stirring at 40°C for 2 hours, and then the solid content was removed by filtration. To the resultant extract, 4-methylveratrole was added to achieve a 4-methylveratrole concentration in the extract of 4.0 ppm. Thus, an extract was obtained.

### [Example 10]

To 31 g of HONKAREBUSHI (Dried bonito, repeatedly fermented) (made in IBUSUKI) (manufactured by yamakichi_kunisawahyakuma Co., Ltd.) shaved with a plane, 62 g of water was added, followed by sterilization at 90°C for 20 minutes. After the sterilization, the mixture was cooled, and 76.4 g of 95% ethanol was added. Extraction was carried out with stirring at 40°C for 2 hours, and then the solid content was removed by filtration. To the resultant extract, 4-methylveratrole was added to achieve a 4-methylveratrole concentration in the extract of 4.0 ppm. Thus, an extract was obtained.

### [Example 11]

To 31 g of SABABUSHI (dried mackerel) powder (manufactured by Izumi Shokuhin Co., Ltd.), 62 g of water was added, followed by sterilization at 90°C for 20 minutes. After the sterilization, Eurotium rubrum strain JCM 22920 was inoculated, and cultured for 7 days by shaking culture at 27°C. To the culture liquid of Eurotium repens strain JCM 22920, 0.1 g of Nuclease "Amano" (manufactured by Amano Enzyme Inc.), 0.1 g of Deamizyme (manufactured by Amano Enzyme Inc.), and 0.1g of Protease A "Amano" G (manufactured by Amano Enzyme Inc.) were added, and the reaction was allowed to proceed with stirring at 50°C for 20 hours. After the reaction, the reaction liquid was heated at 105°C for 30 minutes to perform inactivation. After the inactivation of the enzyme, the reaction liquid was cooled, and 76.4 g of 95% ethanol was added. Then, extraction was carried out with stirring at 40°C for 2 hours. After that, the solid content was removed by filtration. Thus, an extract was obtained.

### [Example 12]

To 31 g of MUROBUSHI (dried scad) powder (manufactured by Izumi Shokuhin Co., Ltd.), 62 g of water was added, followed by sterilization at 90°C for 20 minutes. After the sterilization, the mixture was cooled, and 76.4 g of 95% ethanol was added. Extraction was carried out with stirring at 40°C for 2 hours, and then the solid content was removed by filtration. To the resultant extract, 4-methylveratrole was added to achieve a 4-methylveratrole concentration in the extract of 4.0 ppm. Thus, an extract was obtained.

### [Example 13]

To 31 g of URUMEBUSHI (dried round herring) powder (manufactured by Izumi Shokuhin Co., Ltd.), 62 g of water was added, followed by sterilization at 90°C for 20 minutes. After the sterilization, the mixture was cooled, and 76.4 g of 95% ethanol was added. Extraction was carried out with stirring at 40°C for 2 hours, and then the solid content was removed by filtration. To the resultant extract, 4-methylveratrole was added to achieve a 4-methylveratrole concentration in the extract of 4.0 ppm. Thus, an extract was obtained.

### [Example 14]

To 31 g of MAGUROBUSHI (dried tuna) powder (manufactured by Izumi Shokuhin Co., Ltd.), 62 g of water was added, followed by sterilization at 90°C for 20 minutes. After the sterilization, Eurotium repens strain JCM 1580 was inoculated, and cultured for 7 days by shaking culture at 27°C. To the culture liquid of Eurotium repens strain JCM 1580, 0.1 g of Nuclease "Amano" (manufactured by Amano Enzyme Inc.), 0.1 g of Deamizyme (manufactured by Amano Enzyme Inc.), and 0.1 g of Protease A "Amano" G (manufactured by Amano Enzyme Inc.) were added, and the reaction was allowed to proceed with stirring at 50°C for 20 hours. After the reaction, the reaction liquid was heated at 105°C for 30 minutes to perform inactivation. After the inactivation of the enzyme, the reaction liquid was cooled, and 76.4 g of 95% ethanol was added. Extraction was carried out with stirring at 40°C for 2 hours, and then the solid content was removed by filtration. Thus, an extract was obtained.

### [Example 15]

To 31 g of SODABUSHI (dried frigate mackerel) powder (manufactured by Izumi Shokuhin Co., Ltd.), 62 g of water was added, followed by sterilization at 90°C for 20 minutes. After the sterilization, Eurotium herbariorum strain JCM 10081 was inoculated, and cultured for 7 days by shaking culture at 27°C. To the culture liquid of Eurotium herbariorum strain JCM 10081, 0.1 g of Nuclease "Amano" (manufactured by Amano Enzyme Inc.), 0.1 g of Deamizyme (manufactured by Amano Enzyme Inc.), and 0.1 g of Protease A "Amano" G (manufactured by Amano Enzyme Inc.) were added, and the reaction was allowed to proceed with stirring at 50°C for 20 hours. After the reaction, the reaction liquid was heated at 105°C for 30 minutes to perform inactivation. After the inactivation of the enzyme, the reaction liquid was cooled, and 76.4 g of 95% ethanol was added. Extraction was carried out with stirring at 40°C for 2 hours, and then the solid content was removed by filtration. Thus, an extract was obtained.

### [Example 16]

To 31 g of AGOBUSHI powder (manufactured by Izumi Shokuhin Co., Ltd.), 62 g of water was added, followed by sterilization at 90°C for 20 minutes. After the sterilization, Eurotium repens strain JCM 23060 was inoculated, and cultured for 7 days by shaking culture at 27°C. To the culture liquid of Eurotium repens strain JCM 23060, 0.1 g of Nuclease "Amano" (manufactured by Amano Enzyme Inc.), 0.1 g of Deamizyme (manufactured by Amano Enzyme Inc.), and 0.1 g of Protease A "Amano" G (manufactured by Amano Enzyme Inc.) were added, and the reaction was allowed to proceed with stirring at 50°C for 20 hours. After the reaction, the reaction liquid was heated at 105°C for 30 minutes to perform inactivation. After the inactivation of the enzyme, the reaction liquid was cooled, and 76.4 g of 95% ethanol was added. Extraction was carried out with stirring at 40°C for 2 hours, and then the solid content was removed by filtration. Thus, an extract was obtained.

### [Comparative Example 1]

To 31 g of KATSUOBUSHI ARABUSHI SOSAI HU-MS (manufactured by Izumi Shokuhin Co., Ltd.), 62 g of water was added, followed by sterilization at 90°C for 20 minutes. After the sterilization, the mixture was cooled, and 76.4 g of 95% ethanol was added. Extraction was carried out with stirring at 40°C for 2 hours, and then the solid content was removed by filtration. Thus, an extract was obtained.

### [Comparative Example 2]

To 31 g of HONKAREBUSHI (made in TOSA) (manufactured by YOSHINAGA KATSUO TEN) shaved with a plane, 62 g of water was added, followed by sterilization at 90°C for 20 minutes. After the sterilization, the mixture was cooled, and 76.4 g of 95% ethanol was added. Extraction was carried out with stirring for 2 hours, and then the solid content was removed by filtration. Thus, an extract was obtained.

### [Comparative Example 3]

To 31 g of HONKAREBUSHI (made in IBUSUKI) (manufactured by yamakichi_kunisawahyakuma Co., Ltd.) shaved with a plane, 62 g of water was added, followed by sterilization at 90°C for 20 minutes. After the sterilization, the mixture was cooled, and 76.4 g of 95% ethanol was added. Then, extraction was carried out with stirring at 40°C for 2 hours. After that, the solid content was removed by filtration. Thus, an extract was obtained.

### [Comparative Example 4]

To 31 g of a commercially available HONKAREBUSHI powder (HU) (manufactured by Izumi Shokuhin Co., Ltd.), 62 g of water was added, followed by sterilization at 90°C for 20 minutes. After the sterilization, the mixture was cooled, and 76.4 g of 95% ethanol was added. Extraction was carried out with stirring at 40°C for 2 hours, and then the solid content was removed by filtration. Thus, an extract was obtained.

### [Comparative Example 5]

To 31 g of a commercially available HONKAREBUSHI powder (MK) (manufactured by Izumi Shokuhin Co., Ltd.), 62 g of water was added, followed by sterilization at 90°C for 20 minutes. After the sterilization, the mixture was cooled, and 76.4 g of 95% ethanol was added. Extraction was carried out with stirring at 40°C for 2 hours, and then the solid content was removed by filtration. Thus, an extract was obtained.

### [Comparative Example 6]

To 31 g of SABABUSHI powder (manufactured by Izumi Shokuhin Co., Ltd.), 62 g of water was added, followed by sterilization at 90°C for 20 minutes. After the sterilization, the mixture was cooled, and 76.4 g of 95% ethanol was added. Extraction was carried out with stirring at 40°C for 2 hours, and then the solid content was removed by filtration. Thus, an extract was obtained.

### [Comparative Example 7]

To 31 g of MUROBUSHI powder (manufactured by Izumi Shokuhin Co., Ltd.), 62 g of water was added, followed by sterilization at 90°C for 20 minutes. After the sterilization, the mixture was cooled, and 76.4 g of 95% ethanol was added. Extraction was carried out with stirring at 40°C for 2 hours, and then the solid content was removed by filtration. Thus, an extract was obtained.

### [Comparative Example 8]

To 31 g of URUMEBUSHI powder (manufactured by Izumi Shokuhin Co., Ltd.), 62 g of water was added, followed by sterilization at 90°C for 20 minutes. After the sterilization, the mixture was cooled, and 76.4 g of 95% ethanol was added. Extraction was carried out with stirring at 40°C for 2 hours, and then the solid content was removed by filtration. Thus, an extract was obtained.

### [Comparative Example 9]

To 31 g of MAGUROBUSHI powder (manufactured by Izumi Shokuhin Co., Ltd.), 62 g of water was added, followed by sterilization at 90°C for 20 minutes. After the sterilization, the mixture was cooled, and 76.4 g of 95% ethanol was added. Extraction was carried out with stirring at 40°C for 2 hours, and then the solid content was removed by filtration. Thus, an extract was obtained.

### [Comparative Example 10]

To 31 g of SODABUSHI powder (manufactured by Izumi Shokuhin Co., Ltd.), 62 g of water was added, followed by sterilization at 90°C for 20 minutes. After the sterilization, the mixture was cooled, and 76.4 g of 95% ethanol was added. Extraction was carried out with stirring at 40°C for 2 hours, and then the solid content was removed by filtration. Thus, an extract was obtained.

### [Comparative Example 11]

To 31 g of AGOBUSHI powder (manufactured by Izumi Shokuhin Co., Ltd.), 62 g of water was added, followed by sterilization at 90°C for 20 minutes. After the sterilization, the mixture was cooled, and 76.4 g of 95% ethanol was added. Extraction was carried out with stirring at 40°C for 2 hours, and then the solid content was removed by filtration. Thus, an extract was obtained.

### [Comparative Example 12]

To 31 g of KATSUOBUSHI ARABUSHI SOSAI HU-MS (manufactured by Izumi Shokuhin Co., Ltd.), 62 g of water was added, followed by sterilization at 90°C for 20 minutes. After the sterilization, Eurotium repens strain JCM 1580 was inoculated, and cultured for 7 days by shaking culture at 27°C. After the culture, the culture liquid was heated at 105°C for 30 minutes for sterilization. After the sterilization by heating, the mixture was cooled, and 76.4 g of 95% ethanol was added. Extraction was carried out with stirring at 40°C for 2 hours, and then the solid content was removed by filtration. Thus, an extract was obtained.

### [Comparative Example 13]

To 31 g of KATSUOBUSHI ARABUSHI SOSAI HU-MS (manufactured by Izumi Shokuhin Co., Ltd.), 62 g of water was added, followed by sterilization at 90°C for 20 minutes. After the sterilization, Eurotium herbariorum strain JCM 10081 was inoculated, and cultured for 7 days by shaking culture at 27°C. After the culture, the culture liquid was heated at 105°C for 30 minutes for sterilization. After the sterilization by heating, the mixture was cooled, and 76.4 g of 95% ethanol was added. Extraction was carried out with stirring at 40°C for 2 hours, and then the solid content was removed by filtration. Thus, an extract was obtained.

### [Comparative Example 14]

To 31 g of KATSUOBUSHI ARABUSHI SOSAI HU-MS (manufactured by Izumi Shokuhin Co., Ltd.), 62 g of water was added, followed by sterilization at 90°C for 20 minutes. After the sterilization, 0.1 g of Protease A "Amano" G (manufactured by Amano Enzyme Inc.) was added, and the reaction was allowed to proceed with stirring at 50°C for 20 hours. After the reaction, the reaction liquid was heated at 105°C for 30 minutes to perform inactivation. After the inactivation of the enzyme, the reaction liquid was cooled, and 76.4g of 95% ethanol was added. Extraction was carried out with stirring at 40°C for 2 hours, and then the solid content was removed by filtration. Thus, an extract was obtained.

### [Sensory Evaluations]

Sensory evaluations were conducted by eight professional panelists, and the average values thereof were calculated. For each of the sensory evaluations, the following 8-point scale evaluation (8 to 0) was carried out.

| | |
|---|---|
| Very good (Very tasty) | 7 points |
| Sufficiently good (sufficiently tasty) | 6 points |
| Rather good (Rather tasty) | 5 points |
| Good (Tasty) | 4 points |
| Som ewhat good (Som ewhat tasty) | 3 points |
| Difference is noticeable (Slightly tasty) | 2 points |
| Unchanged (similar to control) | 1 point |
| Deteriorated (Unpalatable) | 0 points |

### [Sensory Evaluation 1]

To 95.0 g of ion-exchanged water, 5.0 g of each of the extracts of Examples and Comparative Examples was added, and a sensory evaluation was conducted by eight professional panelists. The result is shown below.

### <Result 1>

| | | Extract evaluated | GC/MS (Measured value) | Value measured by capillary electrophores is | Sensory evaluation results |
|---|---|---|---|---|---|
| | | | 4-Methylveratrole (ppm) | Inosinic acid (ppm) | |
| Comp Ex. | 1 | ARABUSHI <Brix : 3.9> | 0.0 | 46 | 1.0 |
| | 2 | HONKAREBUSHI (made in TOSA) <Brix:4.1> | 0.0 | 56 | 1.4 |
| | 3 | HONKAREBUSHI (made in IBUSUKI) <Brix : 4.2> | 0.0 | 68 | 2.4 |
| | 4 | Commercially available HONKAREBUSHIpowder (HU) <Brix : 4.0> | 0.0 | 60 | 2.3 |
| | 5 | Commercial available HONKAREBUSHIpowder (MK) <Brix : 3.9> | 0.7 | 48 | 2.5 |
| | 6 | SABABUSHI powder <Brix : 3.8> | 0.0 | 126 | 2.3 |
| | 7 | MUROBUSHI powder <Brix : 5.8> | 0.0 | 134 | 2.1 |
| | 8 | URUMEBUSHI powder <Brix:3.9> | 0.0 | 131 | 1.8 |
| | 9 | MAGUROBUSHI powder <Brix:4.5> | 0.0 | 134 | 2.3 |
| | 10 | SODABUSHI powder<Brix:4.6> | 0.0 | 152 | 2.4 |
| | 11 | AGOBUSHI powder <Brix:4.0> | 0.0 | 40 | 1.3 |
| | 12 | ARABUSHI × treated with only Eurotium repens JCM 1580 <Brix : 4.2> | 2.9 | 58 | 3.1 |
| | 13 | ARABUSHI × treated with only Eurotium herbariorum JCM 10081 <Brix:4.1> | 2.7 | 68 | 3.1 |
| | 14 | ARABUSHI × protease <Brix:4.1> | 0.0 | 49 | 1.3 |
| Ex. | 1 | ARABUSHI × Eurotium repens JCM 1580 × nuc base <Brix : 4.2> | 42.2 | 467 | 6.6 |
| | 2 | ARABUSHI × Aspergillus sydowii JCM 22929 × protease <Brix:4.3> | 41.9 | 518 | 6.3 |
| | 3 | ARABUSHI × Eurotium herbariorum JCM 10081 × deam inase <Brix : 4.2> | 34.6 | 449 | 6.4 |
| | 4 | ARABUSHI × Eurotium repens JCM 23060 × nuclease × deam inase <Brix:5.0> | 34.7 | 273 | 6.8 |
| | 5 | ARABUSHI × Eurotium rubrum JCM 22920 × nuclease × protease <Brix:4.8> | 39.6 | 497 | 6.5 |
| | 6 | ARABUSHI × Eurotium herbariorum JCM 10081 × deam inase × protease <Brix :5.3> | 38.9 | 490 | 6.6 |
| | 7 | ARABUSHI × Eurotium repens JCM 1580 × nuclease × deam inase × protease <Brix :5.4> | 35.3 | 490 | 6.9 |
| | 8 | ARABUSHI × (MA added at final concentration of 4.0 ppm) + (IA added at final concentration of 51 ppm) < Brix : 3.9 | 4.0 | 51 | 5.4 |
| | 9 | ARABUSHI × (MA added at final concentration of 4.0 ppm) <Brix : 3.9> | 4.0 | 46 | 4.6 |
| | 10 | HONKAREBUSHI (made in IBUSUKI) × (MA added at final concentration of 4.0 ppm) <Brix:4.2> | 4.0 | 68 | 5.8 |
| | 11 | SABABUSHIpowder × Eurotium rubrum JCM 22920 × nuclease × deam inase × protease <Brix :6.4> | 31.7 | 250 | 6.1 |
| | 12 | MUROBUSHI powder × (MA added at final concentration of 4.0 ppm) <Brix :5.8> | 4.0 | 134 | 6.0 |
| | 13 | URUMEBUSHI powder × (MA added at final concentration of 4.0 ppm) <Brix :3.9> | 4.0 | 131 | 5.5 |
| | 14 | MAGUROBUSHI powder × Eurotium repensJCM 1580 × nuclease × deam inase × protease <Brix :5.8> | 20.8 | 328 | 6.1 |
| | 15 | SODABUSHIpowder × Eurotium herbariorum JCM 10081 × nuclease × deam inase × protease <Brix :6.1> | 18.3 | 316 | 6.0 |
| | 16 | AGOBUSHIpowder × Eurotium repens JCM 23060 × nuclease × deam inase × protease <Brix :4.5> | 37.8 | 117 | 5.9 |

| | | | | | |
|---|---|---|---|---|---|
| MA : 4-Methylveratrole, IA : Inosinic acid | | | | | |

(Upper rows: Comparative Examples, Lower rows: Examples, the concentrations of 4-methylveratrole and inosinic acid are those in the extracts before dilution for the sensory evaluation.)

### [Sensory Evaluation 2]

To a mixture of 49.9 g of a commercially available Japanese-style noodle soup base (MENTSUYU) (OIGATSUO TSUYU, 2-fold concentrate, manufactured by Mizkan Co., Ltd.) and 49.9 g of ion-exchanged water, 0.2 g of each of the extracts of Examples and Comparative Examples was added, and a sensory evaluation was conducted by eight professional panelists. The result is shown below.

### <Result 2>

| | | Extract evaluated | GC/MS (Measured value) | Value measured by capillary electrophores is | Sensory evaluation results |
|---|---|---|---|---|---|
| | | | 4-Methylveratrole (ppm) | Inosinic acid (ppm) | |
| Comp. | 1 | ARABUSHI <Brix:3.9> | 0.0 | 46 | 1.0 |
| Ex. | 2 | HONKAREBUSHI (made in T0SA) <Brix:4.1> | 0.0 | 560 | 1.8 |
| | 9 | MAGUROBUSHI powder <Brix :4.5> | 0.0 | 134 | 2.1 |
| | 11 | AGOBUSHI powder <Brix:4.0> | 0.0 | 40 | 1.1 |
| Ex. | 1 | ARABUSHI × Eurotium repens JCM 1580 × nuclease <Brix:4.2> | 42.2 | 467 | 6.8 |
| | 4 | ARABUSHI × Eurotium repensJCM 23060 × nuclease × deam inase <Brix:5.0> | 34.7 | 273 | 6.5 |
| | 14 | MAGUROBUSHI powder × Eurotium repensJCM 1580 × nuclease × deam inase × protease <Brix:5.8> | 20.8 | 328 | 6.0 |
| | 16 | AGOBUSHI powder × Eurotium repensJCM 23060 × nuclease × deam inase × protease <Brix:4.5> | 37.8 | 117 | 5.6 |

| | | | | | |
|---|---|---|---|---|---|
| MA : 4-M ethylveratrole, IA : Inosinic acid | | | | | |

### [Sensory Evaluation 3]

To 99.5 g of a commercially available citrus-based sauce (YAMASA OROSHI PONZU manufactured by YAMASA CORPORATION), 0.5 g of each of the extracts of Examples and Comparative Examples was added, and a sensory evaluation was conducted by eight professional panelists. The result is shown below.

### <Result 3>

| | | Extractevaluated | GC/MS (Measured value) | Value measured by capillary electrophoresis | Sensory evaluation results |
|---|---|---|---|---|---|
| | | | 4-Methylveratrole (ppm) | hosinic acid (ppm) | |
| Comp. Ex. | 5 | Commercially available HONKAREBUSHI powder (MK) <Brix:3.9> | 0.7 | 48 | 1.9 |
| | 10 | SODABUSHI powder <Brix:4.6> | 0.0 | 152 | 2.4 |
| | 12 | ARABUSHI × treated with only Eurotium repens JCM 1580 <Brix:4.2> | 2.9 | 58 | 2.4 |
| Ex. | 3 | ARABUSHI × Eurotium herbariorum JCM 10081 × deam inase <Brix:4.2> | 34.6 | 449 | 6.4 |
| | 7 | ARABUSHI × Eurotium repens JGM 1580 × nuclease × deaminase × protease <Brix :5.4> | 35.3 | 490 | 6.6 |
| | 15 | SODABUSHI powder × Eurotium herbariorum JCM 10081 × nuclease × deaminase × protease <Brix :6.1 > | 18.3 | 316 | 5.9 |

| | | | | | |
|---|---|---|---|---|---|
| MA : 4-Methylveratrole IA : Inosinic acid | | | | | |

### [Sensory Evaluation 4]

A soup stock for boiling food of the formula shown below was prepared, and 10.0 g of each of the extracts of Examples and Comparative Examples was added to 990.0 g of the soup stock for boiling food. A taro potato was added to each of the soup stocks for boiling food, and simmered until the taro potato became tender. This simmered taro potato was subjected to a sensory evaluation conducted by eight professional panelists. The formula and the result are shown below.

### <Formula 4>

| Ingredients | Blending ratio (%) |
|---|---|
| Extractevalud | 2.0 |
| Ion-exchanged water | 50.0 |
| SAKE (Japanese rbe wine) | 15.0 |
| Commercially available M R N (sweet cooking SAKE) | 15.0 |
| Sugar | 10.0 |
| Commercially available dark soy sauce | 8.0 |
| Total | 100.0 |

### <Result 4>

| | | Extract evaluated | GC/MS (Measured value) | Value measured by capillary electrophores is | Sensory evaluation results |
|---|---|---|---|---|---|
| | | | 4-Methylveratole (ppm) | Inosinicacid (ppm) | |
| Comp. | 3 | H0NKAREBUSHI (made in IBUSUKI) <Brix : 4.2> | 0.0 | 68 | 2.0 |
| Ex. | 8 | URUMEBUSHI powder <Brix:3.9> | 0.0 | 131 | 2.4 |
| Ex. | 5 | ARABUSHI × Eurotium rubrum JCM 22920 × nuclease × protease <Brix:4.8> | 39.6 | 497 | 6.5 |
| | 6 | ARABUSHI × Eurotium herbariorum JCM 10081 × deam inase × protease <Brix:5.3> | 38.9 | 490 | 6.4 |

| | | | | | |
|---|---|---|---|---|---|
| MA : 4-Methylveratrole IA : Inosinic acid | | | | | |

### [Sensory Evaluation 5]

A low-sodium Japanese-style noodle soup base of the formula shown below was prepared, and 0.5 g of each of the extracts of Examples and Comparative Examples was added to 99.5 g of the low-sodium Japanese-style noodle soup base. Then, a sensory evaluation was conducted by eight professional panelists in terms of a flavor improvement effect on the low-sodium Japanese-style noodle soup base. The formula and the result are shown below.

### <Formula 5>

| Ingredients | Blending ratb (%) |
|---|---|
| Soy sauce | 5.0 |
| Sugar | 2.4 |
| Extract evaluated | 1.6 |
| Common salt | 0.1 |
| Potassium chbride | 0.6 |
| Ion-exchanged water | 90.3 |
| Total | 100.0 |

### <Result 5>

| | | Extract evaluated | GC/MS (Measured value) | Value measured by capillary electrophores is | Sensory evaluation results |
|---|---|---|---|---|---|
| | | | 4-Methylvratrole (ppm) | hosinic acid (ppm) | |
| Comp. | 4 | Commercially available HONKAREBUSHI powder(HU) <Brec :4.0> | 0.0 | 60 | 1.8 |
| Ex. | 7 | MUROBUSHI powder <Brix:5.8> | 0.0 | 134 | 2.5 |
| Ex. | 2 | ARABUSHI × Aspergillus sydowii JCM 22929 × protease <Brix :4.3> | 41.9 | 518 | 6.6 |
| | 8 | ARABUSHI × (MA added at final concentration of 4.0 ppm) + (IA added at final concentration ppm) <Br:3.9> | 4.0 | 51 | 5.6 |

| | | | | | |
|---|---|---|---|---|---|
| MA:4-Methylveratrole, IA: Inosinic acid | | | | | |

### [Sensory Evaluation 6]

A salt-based Chinese-style noodle soup of the formula shown below was prepared, and 4.0 g of each of the extracts of Examples and Comparative Examples was added to 96.0 g of the salt-based Chinese-style noodle soup. A sensory evaluation was conducted by eight professional panelists. The formula and the result are shown below.

### <Formula 6>

| Ingredients | Blending ratio (%) |
|---|---|
| Common salt | 18.0 |
| Sugar | 6.0 |
| Seasoning (amino acid) | 2.0 |
| Seasoning (nucleic acid) | 0.2 |
| Chicken extract | 6.0 |
| Extract evaluated | 4.0 |
| Japanese scalbp extract | 2.5 |
| Yeastextract | 2.0 |
| Kombu extract | 0.6 |
| Onion extract | 0.5 |
| Carrotextract | 0.5 |
| Cabbage extract | 0.5 |
| Protein hydrolysate | 5.0 |
| Sp bes | 0.2 |
| Ion-exchanged water | 52.0 |
| Total | 100.0 |

### <Result 6>

| | | Extract evaluated | GC/MS (Measured value) | Value measured by capillary electrophores is | Sensory evaluation results |
|---|---|---|---|---|---|
| | | | 4-Methylveratrole (ppm) | Inosinic acid (ppm) | |
| Comp. | 6 | SABABUSHI powder <Brix : 3.8> | 0.0 | 126 | 2.5 |
| Ex. | 14 | ARABUSHI × protease <Brix:4.1> | 0.0 | 49 | 1.9 |
| Ex. | 6 | ARABUSH × Eurotium herbariorum JCM 10081 × deaminase × protease <Brix :5.3> | 38.9 | 490 | 6.8 |
| | 12 | MUROBUSHI powder × (MA added at final concentration of 4.0 ppm) <Brix :5.8> | 4.0 | 134 | 5.8 |

| | | | | | |
|---|---|---|---|---|---|
| MA:4-Methylveratrole, IA: Inosinic acid | | | | | |

### [Sensory Evaluation 7]

An oil-free dressing of the formula shown below was prepared, and 0.5 g of each of the extracts of Examples and Comparative Examples was added to 99.5 g of the oil-free dressing. A sensory evaluation was conducted by eight professional panelists. The formula and the result are shown below.

### <Formula 7>

| Ingredients | Blending ratio (%) |
|---|---|
| Dark soy sauce | 10.0 |
| Brewed vinegar (acidity :1096) | 15.0 |
| Common salt | 4.5 |
| Fructose-glucose syrup | 30.0 |
| Seasoning (amino acid) | 0.5 |
| Seasoning (nucleic acid) | 0.1 |
| Fermented seasoning | 2.0 |
| Extract evaluated | 0.5 |
| ET0H | 1.0 |
| Ion-exchanged water | 36.5 |
| Total | 100.0 |

### <Result 7>

| | | Extract evaluated | GC/MS (Measured value) | Value measured by capillary electrophoresis | Sensory evaluation results |
|---|---|---|---|---|---|
| | | | 4-Methylveratrole (ppm) | Inosinic acid (ppm) | |
| Comp. Ex. | 3 | HONKAREBUSHI (made in BUSUKI) <Brix :4.2> | 0.0 | 68 | 1.9 |
| | 13 | ARABUSHI × treated with only Eurotium herbariorum JCM 10081 <Brix :4.1> | 2.7 | 68 | 3.1 |
| Ex. | 7 | ARABUSHI × Eurotium repens JCM 1580 × nucclease × deaminase × protease <Brix :5.4> | 35.3 | 490 | 6.6 |
| | 13 | URUMEBUSHI powder × (MA added at final concentration of 4.0 ppm) <Brix :3.9> | 4.0 | 131 | 5.8 |

| | | | | | |
|---|---|---|---|---|---|
| MA:4-Methylveratrole, IA Inosinic acid | | | | | |

### [Sensory Evaluation 8]

A sauce for SUKIYAKI (a Japanese beef hot pot dish) of the formula shown below was prepared, and 3.0 g of each of the extracts of Examples and Comparative Examples was added to 97.0 g of the sauce for SUKIYAKI. A sensory evaluation was conducted by eight professional panelists. The formula and the result are shown below.

### <Formula 8>

| Ingredients | Blending ratio (%) |
|---|---|
| Dark soy sauce | 20.0 |
| Caster sugar | 8.0 |
| Commercially available MRN (sweet cooking SAKE) | 3.0 |
| SAKE | 3.0 |
| Extract evaluated | 3.0 |
| Kombu extract | 1.5 |
| Yeastextract | 0.5 |
| Ion-exchanged water | 61.0 |
| Total | 100.0 |

### <Result 8>

| | | Extract evaluated | GC/MS (Measured value) | Value measured by capillary electrophores is | Sensory evaluation results |
|---|---|---|---|---|---|
| | | | 4-Methylveratrole (ppm) | hosinic acid (ppm) | |
| Comp Ex. | 1 | ARABUSHI<Bric:3.9> | 0.0 | 46 | 1.0 |
| | 5 | Commercially available HONKAREBUSHI powder (MK) <Brec : 3.9> | 0.7 | 48 | 2.5 |
| Ex. | 4 | ARABUSH I × Eurotium repens JCM 23060 × nuclease × deaminase <Brix:5.0> | 34.7 | 273 | 6.4 |
| | 111 | SABABUSHI powder × Eurotium rubrum JCM 22920 × nuclease × deaminase × protease <Brix : 6.4> | 31.7 | 250 | 5.8 |

| | | | | | |
|---|---|---|---|---|---|
| MA : 4-Methylveratrole, IA: Inosinic acid | | | | | |

## Claims

1. A dried-fishes extract comprising 3.5 ppm or more of 4-methylveratrole.

2. The dried-fishes extract according to claim 1, further comprising 40 ppm or more of inosinic acid.

3. The dried-fishes extract according to claim 1 or 2, wherein
the dried fishes is one or more selected from dried bonito (KATSUOBUSHI), dried frigate mackerel (SODABUSHI), dried mackerel (SABABUSHI), dried sardine (IWASHIBUSHI), dried round herring (URUMEBUSHI), dried scad (MUROBUSHI), dried flying fish (AGOBUSHI), and dried tuna (MAGUROBUSHI).

4. A flavor-improving agent comprising the dried-fishes extract according to any one of claims 1 to 3.

5. A method for producing the dried-fishes extract according to any one of claims 1 to 3, the method comprising the steps of:
fermenting a suspension of dried fishes by adding a mold; and
performing an enzymatic treatment on the suspension.

6. The production method according to claim 5, wherein
the mold is one or more molds selected from the group of the genus Eurotium and the genus Aspergillus.

7. The production method according to claim 5 or 6, wherein
the mold is one or more molds selected from Eurotium repens, Eurotium herbariorum, Eurotium rubrum, and Aspergillus sydowii.

8. The production method according to any one of claims 5 to 7, wherein
the enzymatic treatment is performed by using one or more enzymes selected from the group of nucleases, deaminases, and proteases.
